# EUROPEAN PATENT APPLICATION

(11) **EP 0 973 051 A1**
(43) Date of publication of application: **19.01.2000**
(21) Application number: 99305634.0
(22) Date of filing: 15.07.1999
(51) Int. Cl.: G02B 6/38

(54) **Pin retainer and associated method for assembling a fiber optic connector**

(30) Priority: 17.07.1998 US 118533
(71) Applicant: Siecor Operations, LLC, Hickory, NC 28601-0489 (US)
(72) Inventor: Rosson, Joel C., Hickory, NC 28601 (US)
(74) Representative: Bubb, Antony John Allen

(57) **Abstract**

A pin retainer (20) is provided which, according to one embodiment, includes a spring positioner (40, 42) for engaging a spring (22) so as to retain the spring (22) in position laterally relative to the pin retainer (20). Typically, the spring positioner is a recessed pocket (40) defined by the rear end (20b) of the retainer body for receiving one end of the spring (22). The pin retainer (20) of another embodiment includes a ferrule coupling portion (44) for engaging the ferrule (14) in a manner that is independent of guide pins so as to retain the pin retainer (20) in position rotationally relative to the ferrule (14) without requiring guide pins to extend through the ferrule (14) for engagement by the pin retainer (20). Typically, the ferrule coupling portion is a projection (44) extending outwardly from the forward end (20a) of the retainer body for engaging a corresponding recess (46) defined by the ferrule (14). As a result of the pin retainer (20), a corresponding method for mounting a fiber optic connector upon the end portion of an optical fiber is also provided which permits the connector to be assembled within a jig prior to mounting the connector upon the optical fiber and prior to inserting guide pins through the ferrule for engagement by the pin retainer.

## Description

### FIELD OF THE INVENTION

The present invention relates generally to fiber optic connectors and associated methods for assembling fiber optic connectors and, more particularly, to pin retainers for multi-fiber connectors and associated methods for assembling multi-fiber connectors.

### BACKGROUND OF THE INVENTION

A number of multi-fiber connectors have been developed for mounting upon 2, 4, 8, 12 or more optical fibers. Typically, the plurality of optical fibers are configured in the form of a fiber optic ribbon. However, multi-fiber connectors can be mounted upon the end portion of a plurality of optical fibers that are loose buffered, if so desired.

One example of a common multi-fiber connector is the MTP connector. As known to those skilled in the art, an MTP connector includes an MT ferrule, such as described by U.S. Patent No. 5,214,730 which issued to Shinji Nagasawa et al. on May 25, 1993 and is assigned to Nippon Telegraph & Telephone Corporation. In addition to a multi-fiber ferrule, a multi-fiber connector has a plurality of other components, including a pin retainer, a spring, a spring push, a crimp ring, a boot, a pair of guide pins and an outer housing.

In order to mount a multi-fiber connector, such as an MTP connector, upon the end portions of a plurality of optical fibers, the boot, the crimp ring and the spring push are slid over the fanout jacket. After removing the jacket and the ribbon matrix from end portions of the optical fibers, the optical fibers are cleaned and a spring is slid over the optical fibers. The end portions of the optical fibers are then inserted through respective bores defined by the multi-fiber ferrule. Once fully inserted, the end portions of the optical fibers can be secured within the multi-fiber ferrule by epoxy that is injected through a window defined by the multi-fiber ferrule. After the epoxy cures, the front face of the multi-fiber ferrule as well as the end portions of the optical fibers are polished.

Only after polishing the front face of the ferrule are the remainder of the components of a conventional multi-fiber connector assembled. In this regard, the next component to be assembled is a guide pin assembly that includes a pin retainer and a pair of guide pins extending outwardly therefrom. During assembly, the guide pin assembly is positioned relative to the ferrule such that the pin retainer is adjacent the rear face of the ferrule and the guide pins extend through respective passageways defined by the ferrule. After pulling the jacket and the strength members of the fiber optic cable from under the spring push and flaring the strength members around the spring push, the ferrule is inserted into the connector housing such that the front face of the ferrule is exposed through one end of the housing. Thereafter, the spring push can be inserted into the opposite end of the housing and snapped into position. After sliding the crimp ring over the strength members and onto the rear portion of the spring push, the crimp ring can be crimped or otherwise radially compressed about the spring push. Thereafter, the boot can be slid into position so as to surround the crimp ring, thereby completing the assembly of a conventional multi-fiber connector.

As described above, the polishing of the front face of the ferrule and the optical fibers which extend therethrough must occur after the ferrule is mounted upon the optical fibers, but before the guide pins are inserted through the ferrule. However, a conventional multi-fiber connector generally includes a pin clamp or pin retainer which engages the pair of guide pins prior to inserting the guide pins through respective passageways defined by the ferrule. As such, the guide pins are inserted from the rear face of the ferrule, thereby effectively preventing the assembly of the other components of a conventional multi-fiber connector until after the guide pins have been inserted through the respective passageways defined by the ferrule, i.e., until some time after the ferrule is secured to the optical fibers and the front face of the ferrule has been polished.

Since conventional multi-fiber connectors do not permit the pre-assembly of the various components prior to mounting the multi-fiber ferrule upon the optical fibers, the optical fibers are relatively unprotected during the subsequent assembly of the various components of the multi-fiber connector since the strength members and the jacket have already been removed from the end portions of the optical fibers. As a result, the optical fibers are somewhat prone to damage, including breakage or the like, during the assembly process.

Additionally, since the guide pins of a conventional multi-fiber connector must generally be inserted through the passageways defined by the ferrule prior to the assembly the remainder of the components of the multi-fiber connector, all connectors that are assembled in the factory must be identified in advance as being either a male connector, i.e., a connector having guide pins, or a female connector, i.e., a connector without guide pins.

Conventional multi-fiber connectors have several other shortcomings. For example, those multi-fiber connectors which do not include guide pins generally permit the pin retainer to rotate relative to the ferrule. Among other things, the rotation of the pin retainer relative to the ferrule may allow the pin retainer to bind within the passageway defined by the connector housing, thereby potentially degrading overall connector performance. Moreover, the spring of a conventional multi-fiber connector and, more particularly, the end of the spring adjacent to the pin retainer can move laterally relative to the pin retainer. In instances in which the spring moves laterally relative to the pin retainer to such an extent that the spring contacts the optical fibers, the multi-fiber connector may further attenuate the optical signals or the multi-fiber connector may suffer physical damage.

### SUMMARY OF THE INVENTION

The pin retainer and the associated fiber optic connector of the present invention addresses the above-described shortcomings of conventional multi-fiber connectors by eliminating rotation of the pin retainer relative to the ferrule and by preventing lateral movement of the spring relative to the pin retainer. In addition, a corresponding method for mounting a fiber optic connector including a pin retainer upon the end portion of an optical fiber is provided which permits the connector to be assembled and mounted upon the optical fiber prior to inserting guide pins through the ferrule for engagement by the pin retainer. As such, guide pins can be inserted into the fiber optic connector in the field once the requirements of a particular application have been determined.

According to the present invention, the pin retainer includes a retainer body extending lengthwise between opposed forward and rear ends. The retainer body also defines a passageway extending between the forward and rear ends for receiving at least one optical fiber. In addition, the retainer body includes an engagement portion, proximate the forward end of the retainer body, for engaging at least one guide pin.

According to one advantageous embodiment, the pin retainer includes a spring positioner for engaging a spring so as to retain the spring in position laterally relative to the retainer body of the pin retainer. Typically, the spring positioner is a recessed pocket defined by the rear end of the retainer body for receiving one end of the spring. In this embodiment, the recessed pocket generally has a circular shape and is centered about that portion of the passageway defined by the retainer body that opens through the rear end of the retainer body. Alternatively, the spring positioner can include one or more projections extending outwardly from the rear end of the retainer body for engaging the spring. In either embodiment, the spring positioner prevents undesired lateral movement of the spring relative to the retainer body, thereby also avoiding the increased attenuation and possible physical damage created by lateral movement of a spring relative to the pin retainer of a conventional multi-fiber connector.

According to another embodiment, the pin retainer includes a ferrule coupling portion, proximate the forward end of the retainer body, for engaging the ferrule. The ferrule coupling portion is independent of guide pins so as to retain the pin retainer in position rotationally relative to the ferrule without requiring guide pins to extend through the ferrule for engagement by the engagement portion of the retainer body.

Typically, the ferrule coupling portion is a projection extending outwardly from the forward end of the retainer body for engaging a corresponding recess defined by the ferrule. For example, the projection can have a substantially rectangular shape in lateral cross-section and can extend outwardly from that portion of the forward end of the retainer body through which the passageway opens such that the passageway defined by the retainer also extends through the projection. In this regard, the ferrule coupling portion of one embodiment includes a projection centered about the passageway for engaging a corresponding recess defined by the ferrule. According to another embodiment, the ferrule coupling portion includes a recess defined by the forward end of the retainer body for receiving a corresponding projection extending outwardly from the rear face of the ferrule. In either embodiment, the ferrule coupling portion serves to prevent the pin retainer from rotating relative to the ferrule, thereby preventing the pin retainer from binding within the passageway defined by the connector housing as described above in conjunction with conventional multi-fiber connectors. In addition, the engagement of the ferrule by the ferrule coupling portion of the pin retainer also facilitates movement of the ferrule and pin retainer as a unit through the passageway defined by the connector housing.

According to the method aspects of the present invention, a jig is provided for temporarily retaining the various components of the fiber optic connector while the ferrule is mounted upon the end portion of an optical fiber. Initially, the ferrule, the pin retainer, the spring and a spring push are inserted within the jig. In one advantageous embodiment, the jig includes a base and upstanding sidewalls extending along opposite sides of the base. According to one embodiment, the upstanding sidewalls define respective windows for engaging corresponding tabs extending outwardly from the opposite sides of the spring push in order to detachably mount the spring push within the jig as the various components of the fiber optic connector are inserted into the jig. The upstanding sidewalls of the jig can also include inwardly extending ribs adjacent one end of the base for engaging the shoulder of the ferrule as the various components of the fiber optic connector inserted into the jig. In this regard, the front portion of the ferrule will generally extend beyond the jig, while a rear portion of the ferrule, the pin retainer, the spring and at least a portion of the spring push are retained within the jig.

Once the components have been inserted into the jig, the end portion of the optical fiber is then inserted through the crimp body, the spring, and passageways defined by the pin retainer and the ferrule. Thereafter, an end portion of the optical fiber is secured within the ferrule. By assembling the ferrule, the pin retainer, the spring and the spring push prior to mounting the ferrule upon the optical fiber, the optical fiber is protected from inadvertent damage during the assembly process. After securing to the optical fiber within the ferrule, the ferrule, the pin retainer, the spring and the crimp body are removed from the jig and inserted at least partially within a connector housing such that the end portion of the optical fiber secured within the ferrule is exposed through the forward end of the connector housing.

According to this aspect of the present invention, guide pins need not be inserted through corresponding passageways defined by the ferrule for engagement by the pin retainer until after the ferrule, the pin retainer, the spring and the crimp body have been assembled and inserted into the connector housing. As such, the guide pins need not be inserted in the factory during assembly of the connector, but can be inserted in the field once the requirements of a particular application are known. Since the guide pins need not be inserted until the various components of the fiber optic connector are inserted into the connector housing, the end portions of the optical fibers that are exposed through the front face of the ferrule can be polished either before or after the components of the fiber optic connector are removed from the jig, thereby further increasing the versatility of the assembly process of the present invention.

### BRIEF DESCRIPTION OF THE DRAWINGS

Figure 1 is an exploded perspective view of a fiber optic connector including a pin retainer according to one advantageous embodiment of the present invention.

Figures 2a and 2b are perspective views of a pin retainer according to two alternative embodiments of the present invention illustrating pin retainers having different types of spring positioners.

Figures 3a and 3b are exploded perspective views of a pin retainer and an associated ferrule according to two alternative embodiments of the present invention which illustrate pin retainers having different types of ferrule coupling portions.

Figure 4 is a perspective view of a jig utilized during the process of mounting a fiber optic connector according to one aspect of the present invention.

Figures 5a and 5b are perspective views of a jig in which a ferrule, a pin retainer, a spring, a spring push and a lead-in tube have been inserted.

Figure 6 is a flow chart illustrating the operations performed to mount a fiber optic connector upon the end portion of an optical fiber according to one advantageous method of the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

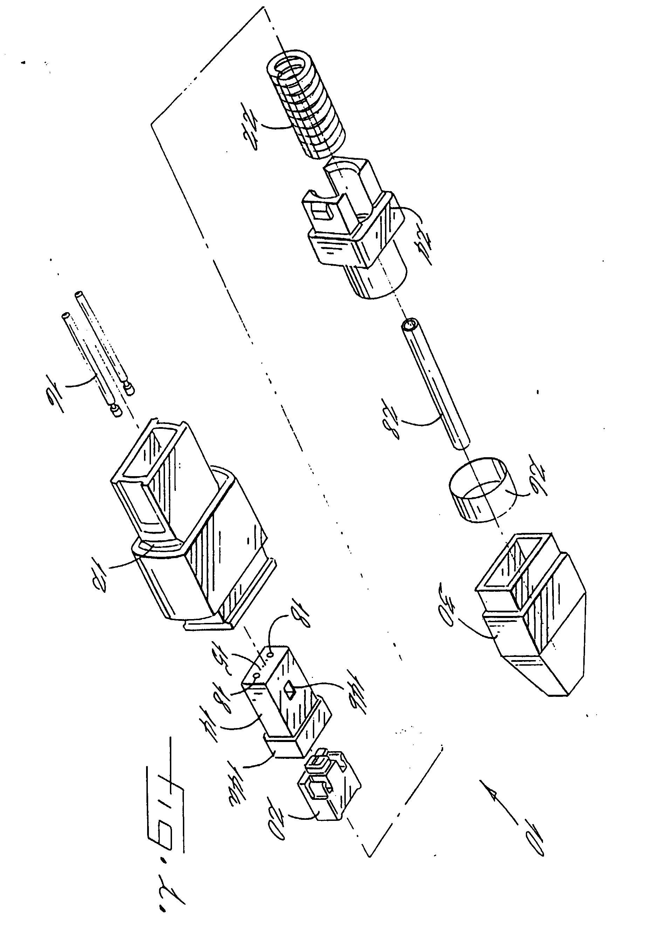

As shown in Figure 1, a fiber optic connector and, more particularly, a multi-fiber connector **10** includes a number of components which must be assembled and mounted on the end portions of a plurality of optical fibers of a fiber optic cable. A multi-fiber connector generally includes a connector housing **12** and a multi-fiber ferrule **14**, such as an MT ferrule as described by U.S. Patent No. 5,214,730 to Shinji Nagasawa, et al. The multi-fiber connector also includes guide pins **16** for extending through respective passageways **18** defined by the ferrule and a pin retainer **20** for engaging one end of the guide pins. As shown in Figure 1, the multi-fiber connector further includes a spring **22** for urging-the pin retainer and the ferrule in a forward direction within the connector housing and a spring push **24** which is secured to the strength members of the fiber optic cable by means of a crimp ring **26**. The multi-fiber connector also generally includes a fiber lead-in tube **28** which extends through the spring push and the spring for facilitating insertion of the optical fibers into passageways defined through the pin retainer and the ferrule. Finally, the multi-fiber connector can also include a connector boot 30 for providing at least some strain relief for the optical fibers.

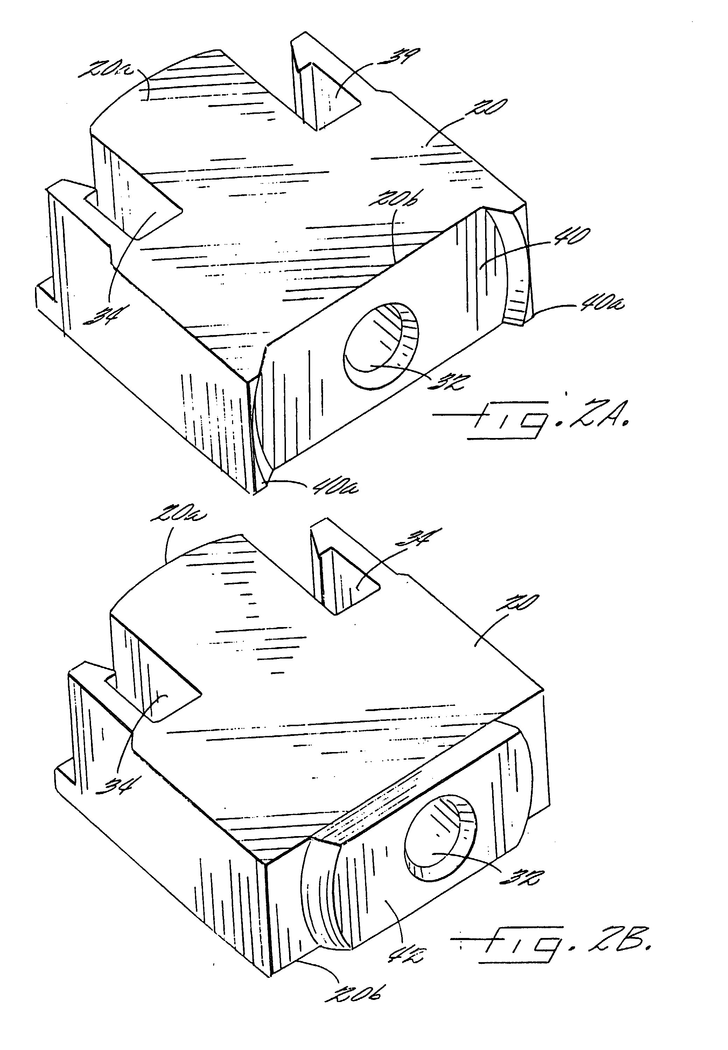

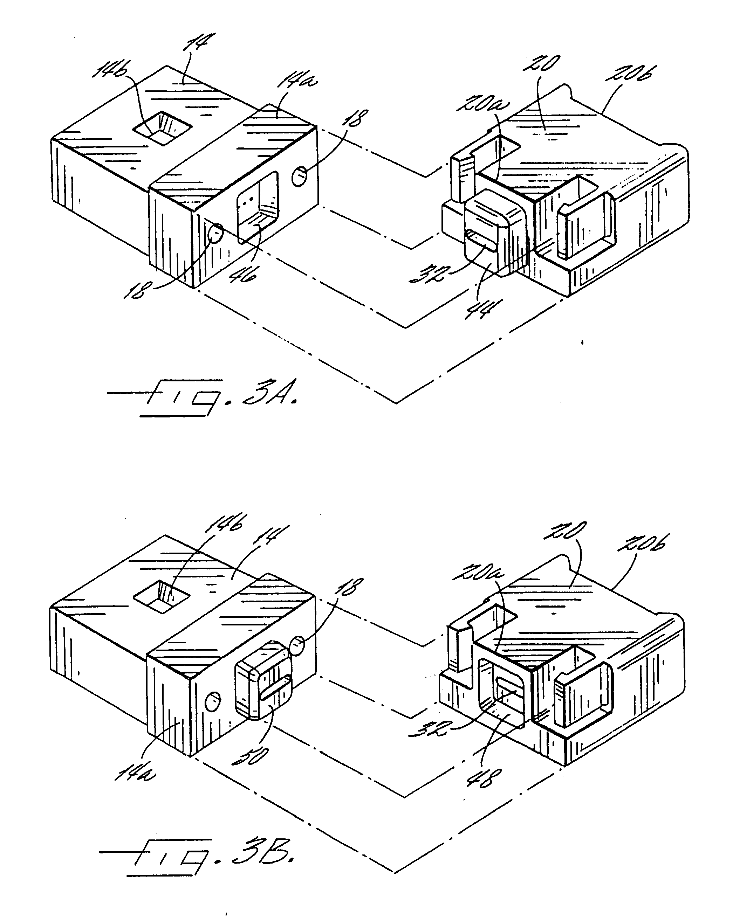

According to the present invention, an improved pin retainer **20** is provided. The pin retainer includes a retainer body extending lengthwise between opposed forward and the rear ends **20a, 20b**. The retainer body also defines a passageway **32** extending between the forward and rear ends for receiving the optical fibers. Although the passageway can have a variety of shapes and sizes, the passageway defined by the retainer body of one advantageous embodiment tapers from a larger opening in the rear end of the retainer body to a smaller opening in the forward end of the retainer body. See Figures 2a and 3a, respectively. As shown in Figures 2a and 2b, the larger opening generally has a circular shape in lateral cross-section that is sized to be approximately equal to the size of the fiber lead-in tube **28** such that the fiber lead-in tube can be readily aligned with the opening in the rear end of the pin retainer, thereby facilitating insertion of the optical fibers from the fiber lead-in tube into the opening in the rear end of the retainer body. As shown in Figures 3a and 3b, however, the smaller opening in the forward end of the retainer body preferably defines a laterally extending slit for positioning the optical fibers in the side-by-side relationship. By transitioning the optical fibers into a side-by-side relationship as the optical fibers advance through the tapering passageway, the optical fibers are positioned in a manner which facilitates their insertion into respective bores **15** extending through the ferrule **14** which are also arranged in a lateral side-by-side relationship.

The retainer body of the pin retainer **20** of the present invention also includes engagement portions, proximate the forward end **20a** of the retainer body, for engaging the guide pins **16**. As shown in Figure 1, for example, embodiments of the fiber optic connector **10** which include two guide pins also generally include a pin retainer having a retainer body with two engagement portions for engaging respective ones of the guide pins. Each engagement portion generally defines an opening **34** which opens through the forward end of the retainer body and, in the illustrated embodiment, also through the upper surface of the retainer body. Each opening is also typically bounded on one side by a relatively thin, upstanding wall **36** which is adapted to flex somewhat in order to accommodate insertion of the end portion of the respective guide pin into the opening.

In the illustrated embodiment in which each guide pin **16** includes a neck portion **16a** of reduced diameter proximate the end of the guide pin that is engaged by the pin retainer **20**, the forward end of the upstanding wall **36** preferably includes an inwardly extending rib **38** for engaging the neck portion of the respective guide pin as the end of the guide pin is inserted into the respective opening **34.** In order to facilitate insertion of the guide pins into the openings defined by the pin retainer, the inwardly extending ribs can be tapered as shown in Figures 3a and 3b. Once the ends of the guide pins have been inserted into the respective openings, the upstanding walls return to their original positions such that the pin retainer positively engages-the guide pins. Although the upstanding wall portions which partially define the openings are depicted to be connected along two sides to the remainder of the retainer body, the walls can have other forms without departing from the spirit and scope of the present invention. For example, the walls can be formed by a pair of arms which extend forwardly from the retainer body so as to be connected to the remainder of the retainer body along only a single side.

As shown in Figures 2a and 2b, the pin retainer **20** of one advantageous embodiment also includes a spring positioner, proximate the rear end **20b** of the retainer body, for engaging one end of the spring **22**. According to this embodiment, the spring positioner retains the spring in position laterally relative to the retainer body of the pin retainer. As shown in Figure 2a, the spring positioner can be formed by a recessed pocket **40** defined by the rear end of the retainer body for receiving one end of the spring. In order to apply relatively even forces upon the pin retainer and, in turn, the ferrule **14**, the spring is preferably centered relative to the pin retainer. As such, the spring positioner and, more particularly, the recessed pocket as shown in Figure 2a is also preferably centered within the rear end of the retainer body. Since the passageway **32** defined by the retainer body also generally opens through the center of the rear end of the retainer body, the recessed pocket of this embodiment is also preferably centered about that portion of the passageway that opens through the rear end of the retainer body.

The recessed pocket **40** of this embodiment of the spring positioner is preferably sized and shaped so as to match or correspond to the size and shape of the spring **22**. For helical springs having a generally circular shape in lateral cross-section, the recessed pocket **40** also preferably has a generally circular shape in lateral cross-section. As shown in Figure 2a, however, the recessed pocket need not support the entire end of the spring, but can, instead, be open along the upper and lower sides of the pin retainer **20** since the diameter of the spring is generally larger than the height of the pin retainer. It is noted, however, that a sufficient percentage of the recessed pocket should be bordered by outwardly extending walls **40a** so as to prevent the spring from moving in any lateral direction relative to the retainer body of the pin retainer **20.**

Although the pin retainer **20** of one advantageous embodiment includes a recessed pocket **40**, the spring positioner can be formed in different manners without departing from the spirit and scope of the present invention. For example, the spring positioner can include one or more projections **42** extending outwardly from the rear end **20b** of the retainer body for engaging one end of the spring **22**. As shown in Figure 2b, for example, the projection can include a relatively large projection which fills the hollow interior of the end of the spring which contacts the pin retainer. However, the spring positioner can include other types of projections, such as one or more walls which extend along the inside and/or the outside of at least a portion of the end of the spring which contacts the rear end of the retainer body.

In any event, the pin retainer **20** of the present invention which includes a spring positioner prevents the spring **22** from moving laterally relative to the retainer body of the pin retainer. As such, the spring is prevented from contacting the optical fibers which could increase the attenuation of the optical signals or could physically damage the optical fibers in some instances.

The pin retainer **20** of the present invention can also include a ferrule coupling portion, proximate the forward end **20a** of the retainer body, for engaging the ferrule **14.** In contrast to conventional multi-fiber connectors, the ferrule coupling portion of the pin retainer of the present invention is independent of guide pins **16** so as to retain the pin retainer in position rotationally relative to the ferrule without requiring guide pins to extend through the ferrule and to be engaged by the engagement portions of the retainer body.

As illustrated in Figure 3a, the ferrule coupling portion of one advantageous embodiment includes a projection **44** extending outwardly from the forward end **20a** of the retainer body for engaging a corresponding recess **46** defined by the ferrule **14.** Although the projection which extends outwardly from the forward end of the retainer can have a variety of cross-sectional shapes, the projection of one advantageous embodiment has a substantially rectangular shape in lateral cross-section. As such, the recess defined by the ferrule has a corresponding shape, such as a substantially rectangular shape in lateral cross-section.

Although not necessary for the practice of the present invention, the ferrule coupling portion is generally centered upon the forward end **20a** of the retainer body. Since the passageway **32** defined by the retainer body is also generally centered within the retainer body, the ferrule coupling portion and, in the illustrated embodiment, the outwardly extending projection **44** is also preferably centered about the passageway such that the passageway defined by the retainer body also extends through the projection.

Although the illustrated embodiment in which the ferrule coupling portion is formed by a projection **44** which extends outwardly from the forward end **20a** of the retainer body is particularly advantageous, the ferrule coupling portion of another embodiment can instead include a recess **48** defined by the forward end of the retainer body for receiving a corresponding projection **50** extending rearwardly from the ferrule **14** as shown in Figure 3b. In either embodiment, the ferrule coupling portion prevents the pin retainer **20** from rotating relative to the ferrule, thereby also preventing the pin retainer from binding within the passageway defined by the housing **12** of the fiber optic connector **10.** Since the ferrule coupling portion of the pin retainer of the present invention couples the pin retainer and the ferrule independent of guide pins **16**, the ferrule coupling portion prevents relative rotation of the pin retainer and the ferrule even in instances in which the resulting connector is a female connector that does not include guide pins. In addition, the engagement of the ferrule by the ferrule coupling portion of the pin retainer also facilitates movement of the ferrule and pin retainer as a unit through the passageway defined by the connector housing.

As a result of the unique construction of the pin retainer **20** of the present invention, the various components of the fiber optic connector **10** can be assembled prior to inserting the guide pins **16**. As such, the various components of the fiber optic connector of the present invention can be assembled in the factory and guide pins can be installed in the field once the requirements of the particular application have been determined. Since the various components of the fiber optic connector can be assembled prior to inserting guide pins, the various components of the fiber optic connector can also be assembled prior to mounting the assembled components upon the end portions of the optical fibers and prior to polishing the front face of the ferrule **14.** As a result, the likelihood of damaging the optical fibers during the process of assembling the fiber optic connector is significantly reduced by at least partially assembling the connector prior to mounting the connector upon the optical fibers.

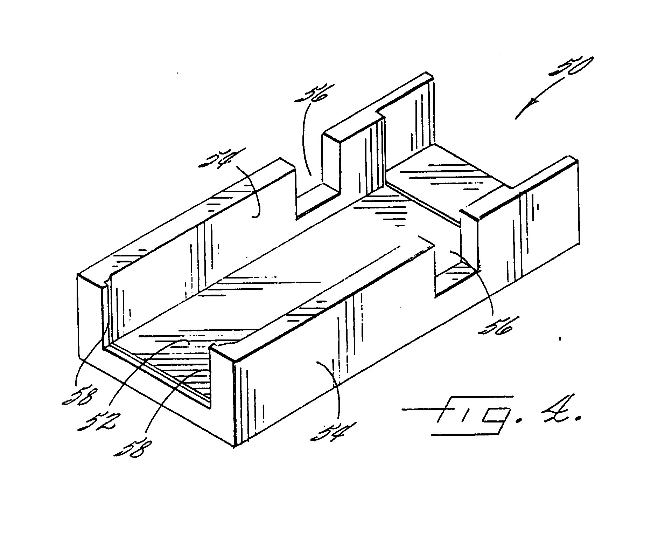

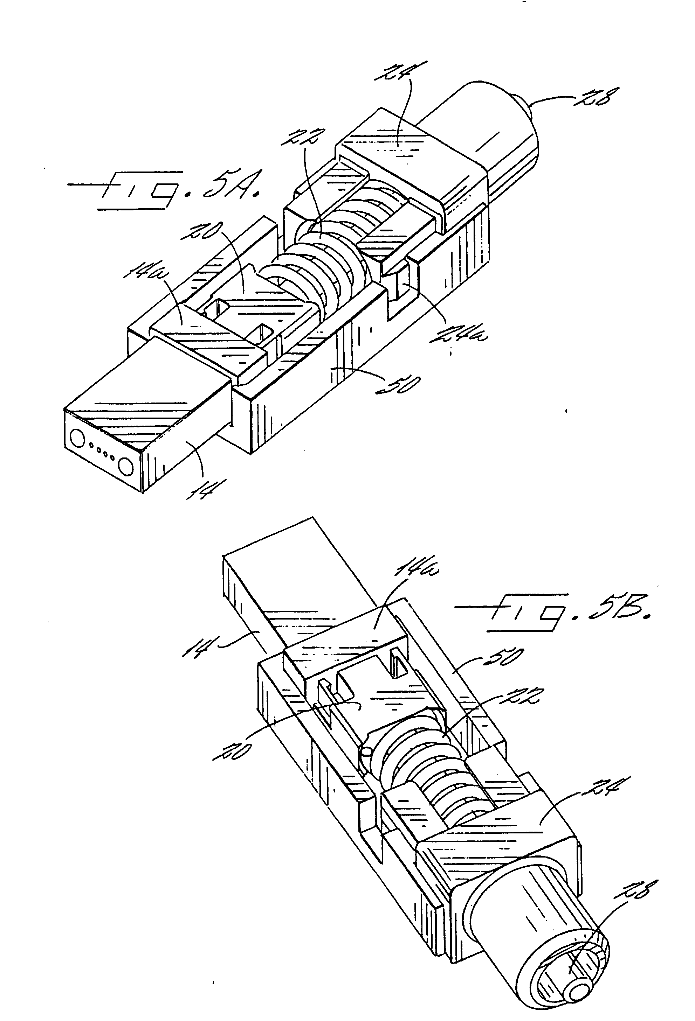

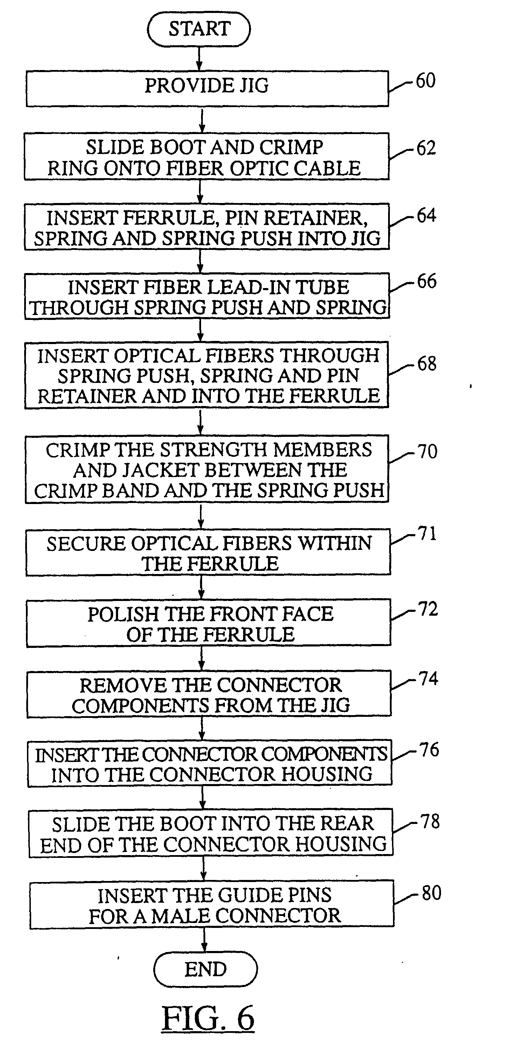

Accordingly, a method for mounting a fiber optic connector **10** upon the end portion of an optical fiber and, more preferably, upon the end portions of a plurality of optical fibers is also provided according to the present invention. As illustrated in block **60** of Figure 6, a jig or temporary housing **50** is initially provided which includes a base **52** and a pair of upstanding sidewalls **54** extending along opposite sides of the base. See Figure 4. After sliding the boot **30** and the crimp ring **26** upon the fiber optic cable, the ferrule **14**, the pin retainer **20**, the spring **22** and the spring push **24** are inserted into the jig as shown in Figures 5a and 5b and in blocks **62** and **64** of Figure 6. As illustrated, the jig of one advantageous embodiment includes sidewalls which define respective windows **56** for engaging corresponding tabs **24a** extending outwardly from opposite sides of the spring push. As such, the spring push is detachably mounted to the jig during the process of inserting the ferrule, the pin retainer, the spring and the spring push into the jig since the tabs extending outwardly from opposite sides of the spring push engage respective windows defined by the sidewalls of the jig. Additionally, the sidewalls of the jig adjacent one end of the base preferably include inwardly extending ribs **58.** In addition, a similar rib can extend upwardly from the same end of the base. As such, the inwardly extending ribs can engage the shoulder **14a** of the ferrule so as to retain the rear portion of the ferrule within the jig notwithstanding forces imparted by the spring that urge the ferrule in a forward direction. Thus, the jig retains the ferrule, the pin retainer, the spring and the spring push as a result of the engagement of the shoulder of the ferrule at one end and the engagement of the tabs which extend outwardly from the spring push at the other end.

Once the ferrule **14**, the pin retainer **20**, the spring **22** and the spring push **24** have been inserted into the jig **50,** the fiber lead-in tube **28** is inserted through the spring push and the spring so as to abut the rear end **20b** of the retainer body. See block **66.** As described above, that portion of the passageway **32** defined by the pin retainer **20** which opens through the rear end of the retainer body is preferably tapered so as to receive one end of the fiber lead-in tube, thereby aligning the fiber lead-in tube with the passageway defined by the pin retainer. Thereafter, the end portions of the optical fibers can be inserted through the fiber lead-in tube, through the passageway defined by the pin retainer and into respective bores **15** defined by the ferrule such that end portions of the optical fibers are exposed through the front face of the ferrule. See block **68**.

The strength members of the fiber optic cable are then flared about the rear portion of the spring push **24** and the crimp ring **26** is slid over the rear portion of the spring push. By crimping or otherwise radially compressing the crimp ring about the spring push, the strength members of the fiber optic cable can be secured to the spring push. See block **70**. Although not shown, the crimp ring can include barbs for engaging the jacket of the fiber optic cable. The optical fibers are then secured within the ferrule **14** by injecting epoxy through the window **14b** defined by the ferrule. See block **71.** In addition to securing the optical fibers within the ferrule, the epoxy typically wicks rearward along the optical fibers so as to further secure the spring push to the optical fibers.

As shown in blocks **74** and **76,** the ferrule **14**, the pin retainer **20**, the spring **22** and the spring push **24** can then be removed from the jig **50** and inserted at least partially into the connector housing **12** such that the tabs **24a** which extending outwardly from opposite sides of the spring push engage corresponding engagement features of the connector housing as known to those skilled in the art. As such, the end portions of the optical fibers secured within the ferrule will be exposed through the forward end of the connector housing. Thereafter, the connector boot **30** can be slid into the rear end of the connector housing so as to provide strain relief for the optical fibers. See block **78**.

According to the present invention, the end portions of the optical fibers can be polished either before or after the ferrule **14**, the pin retainer **20**, the spring **22** and the spring push **24** are removed from the jig **50** since the guide pins **16** are not inserted into the ferrule and engaged by the pin retainer until after the various components of the fiber optic connector **10** have been inserted into the connector housing **12.** See blocks **72** and **80.** In this regard, the guide pins are generally inserted from the forward end of the ferrule into the respective passageways **18** until the engagement portions of the pin retainer engage the neck portions **16a** of the guide pins.

Accordingly, the pin retainer **20** and associated method for assembling a fiber optic connector **10** can be at least partially assembled within the jig **50** prior to mounting the assembled components upon the end portions of the optical fibers, thereby reducing the opportunity for damage to the optical fibers during the processes of assembling the various components of the fiber optic connector and polishing the forward end of the ferrule **14** and the optical fibers that are exposed through the front face of the ferrule. In addition, the fiber optic connector of the present invention permits the guide pins **16** to be inserted after the fiber optic connector has been otherwise completely assembled. As such, the fiber optic connector can be assembled and mounted upon the end portions of the optical fibers in the factory, while permitting the guide pins to be inserted at some later time, such as in the field once the requirements of a particular application have been determined.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A pin retainer comprising:
a retainer body extending lengthwise between opposed forward and rear ends and defining a passageway extending therebetween for receiving at least one optical fiber, wherein said retainer body comprises an engagement portion, proximate the forward end of said retainer body, for engaging at least one guide pin; and
a ferrule coupling portion, proximate the forward end of said retainer body, for engaging a ferrule, said ferrule coupling portion being independent of guide pins so as to retain the pin retainer in position rotationally relative to the ferrule without requiring guide pins to extend through the ferrule and to be engaged by the engagement portion of said retainer body.

2. A pin retainer according to Claim 1 wherein said ferrule coupling portion comprises a projection extending outwardly from the forward end of said retainer body for engaging a corresponding recess defined by the ferrule.

3. A pin retainer according to Claim 2 wherein the projection has a substantially rectangular shape in lateral cross-section.

4. A pin retainer according to Claim 2 or 3 wherein the passageway defined by said retainer body also extends through the projection.

5. A pin retainer according to Claim 1 wherein said ferrule coupling portion comprises a recess defined by the forward end of said retainer body for receiving a corresponding projection extending outwardly from the ferrule.

6. A pin retainer according to any one of Claims 1-5 wherein the passageway defined by said retainer body tapers from a larger opening in the rear end of said retainer body to a smaller opening in the forward end of said retainer body, and wherein the smaller opening in the forward end of said retainer body defines a laterally extending slit for positioning a plurality of optical fibers in a side-by-side relationship.

7. A method for mounting a fiber optic connector upon an end portion of an optical fiber, the method comprising the steps of:
inserting a ferrule, a pin retainer, a spring and a spring push within a jig;
inserting the end portion of the optical fiber through the spring push, the spring, the pin retainer and the ferrule;
securing a portion of the optical fiber within the ferrule;
removing the ferrule, the pin retainer, the spring and the spring push from the jig once the portion of the optical fiber is secured within the ferrule; and
inserting the ferrule, the pin retainer, the spring and the spring push at least partially within a connector housing such that the end portion of the optical fiber secured within the ferrule is exposed through a forward end of the connector housing.

8. A method according to Claim 7 further comprising a step of polishing the end portion of the optical fiber prior to said step of inserting the ferrule, the pin retainer, the spring and the spring push at least partially within the connector housing.

9. A method according to Claim 7 or 8 further comprising a step of inserting at least one guide pin through a corresponding passageway defined by the ferrule for engagement by the pin retainer, wherein said step of inserting at least one guide pin is subsequent to said step of inserting the ferrule, the pin retainer, the spring and the spring push at least partially within the connector housing.

10. A method according to any of Claims 7-9 further comprising a step of providing a jig comprising a base and upstanding sidewalls extending along opposite sides of the base.

11. A method according to Claim 10 wherein the upstanding sidewalls define respective windows, and wherein said step of inserting the ferrule, the pin retainer, the spring and the spring push within the jig comprises engaging tabs extending outwardly from opposite sides of the spring push within respective windows defined by the upstanding sidewalls such that the spring push is detachably mounted to the jig.

12. A method according to Claim 10 or 11 wherein the upstanding sidewalls include inwardly extending ribs adjacent one end of the base, and wherein said step of inserting the ferrule, the pin retainer, the spring and the spring push within the jig comprises engaging a shoulder of the ferrule with the inwardly extending ribs such that a forward end of the ferrule extends beyond the jig while a rear portion of the ferrule is retained within the jig.
